# EUROPEAN PATENT APPLICATION

(11) **EP 4 659 577 A1**
(43) Date of publication of application: **10.12.2025**
(21) Application number: 25174773.9
(22) Date of filing: 07.05.2025
(51) Int. Cl.: A01M 7/00, G06V 20/56, A01B 69/00

(54) **IMAGING SYSTEMS AND RELATED COMPUTING SYSTEMS AND METHODS FOR PROCESSING IMAGES AND DETERMINING EQUIPMENT TRAJECTORIES**

(30) Priority: 23.05.2024 US 202463651079 P
(71) Applicant: Agco Corporation, Duluth, Georgia 30096 (US)
(72) Inventor: BEER, Benjamin Michael, Jackson, 56143 (US)
(74) Representative: AGCO Intellectual Property Department

(57) **Abstract**

Imaging systems and related computing systems and methods for processing images and determining equipment trajectories are disclosed. A computing system is configured to display, on an electronic display, an image taken from a boom perspective that is remote from an operator of the agricultural machine, a boom trajectory corresponding to a path predicted to be traveled across the image for a point along the boom responsive to a steering signal and display a trajectory line superimposed over the image. An imaging system includes an image capture device mounted to a boom and a processor. The processor is configured to identify an object in an image captured by the image capture device, determine whether the identified object is an obstacle to movement of the boom, and generate a warning signal responsive to a determination that the identified object is an obstacle to movement of the boom.

## Description

### CROSS-REFERENCE TO RELATED APPLICATIONS

Not applicable.

### FIELD

Embodiments of the present disclosure relate generally to imaging systems and related computing systems and methods for processing images and determining equipment trajectories are disclosed.

### BACKGROUND

Chemical sprayers used in agriculture may be attached to a boom carried by an agricultural machine. A relatively long boom (e.g., 100 to 120 feet long) may place the tip of the boom and sprayer nozzles attached to the boom 50 to 60 feet out at either side of the agricultural machine, and in an operator's peripheral vision or beyond as the operator navigates the agricultural machine within a field. It may be difficult for the operator to accurately judge the actual positions of the boom tip and/or the sprayer nozzles. For example, the operator may experience parallax as to the actual position of the boom tip and/or the sprayer nozzles. As a result, operators may occasionally hit fence posts or other objects with the boom, or even misapply chemical at the end of the field (e.g., while opening a field). This problem is further compounded where labor challenges may result in less skilled operators that are more prone to make mistakes in navigating the boom than more experienced operators.

### BRIEF SUMMARY

In an aspect of the disclosure, a computing system includes one or more processors. The computing system also includes one or more data storage devices having machine-executable code stored thereon. The machine-executable code configures the one or more processors to display, on an electronic display visible to an operator of an agricultural machine, an image captured by an image capture device mounted to a boom carried by the agricultural machine. The image is taken from a boom perspective that is remote from the operator of the agricultural machine. The machine-executable code also configures the one or more processors to determine one or more boom trajectories corresponding to paths predicted to be traveled across the image for one or more points along the boom responsive to a steering signal received from a steering system of the agricultural machine. The machine-executable code further configures the one or more processors to display, on the electronic display, one or more trajectory lines superimposed over the image. The one or more trajectory lines illustrate the one or more boom trajectories.

In some embodiments, one or more trajectory lines include a tool trajectory line illustrating a tool trajectory predicted to be traveled by a tool mounted to the boom.

In some embodiments, a tool is a chemical sprayer.

In some embodiments, one or more trajectory lines include a boom tip trajectory line illustrating a boom tip trajectory predicted to be traveled by a tip of the boom.

In some embodiments, machine-executable code configures one or more processors to dynamically update one or more trajectory lines in at least substantially real time responsive to changes in steering of an agricultural machine, the changes in steering detected using a steering signal.

In some embodiments, machine-executable code configures one or more processors to: identify an object in an image; determine whether the identified object is an obstacle to movement of a boom; and generate a warning signal responsive to a determination that the identified object is an obstacle to movement of the boom.

In an aspect of the disclosure, an imaging system includes one or more tools mounted to a boom carried by an agricultural machine. The imaging system also includes an image capture device mounted to the boom. The imaging system also includes one or more processors configured to identify an object in an image captured by the image capture device, determine whether the identified object is an obstacle to movement of the boom, and generate a warning signal responsive to a determination that the identified object is an obstacle to movement of the boom.

In some embodiments, one or more processors are configured to: detect, from an image captured by an image capture device, an end of a field; and identify the object in the image captured by the image capture device responsive to a detection of the end of the field.

In some embodiments, one or more processors are configured to detect, in an image captured by the image capture device, an end of a field using green-on-brown imaging.

In some embodiments, one or more processors are configured to distinguish, in an image captured by an image capture device, between the end of the field and already emerged crop plants using green-on-green imaging.

In some embodiments, a warning signal is configured to trigger an alarm to alert an operator of an agricultural machine that a boom is moving towards an obstacle.

In some embodiments, a warning signal is configured to trigger provision of one or more driving suggestions to an operator of an agricultural machine.

In some embodiments, a warning signal is configured to trigger one or more automatic collision prevention actions.

In some embodiments, an image capture device comprises one or more of a camera, an imaging radar device, a point cloud device, or a light detection and ranging (LiDAR) device.

In some embodiments, one or more processors are configured to: determine one or more boom trajectories corresponding to paths predicted to be traveled across an image for one or more points along a boom responsive to a steering signal received from a steering system of an agricultural machine; and display, on an electronic display, the image and one or more trajectory lines superimposed over the image, the one or more trajectory lines illustrating the one or more boom trajectories.

In an aspect of the disclosure, a method includes receiving image data corresponding to an image captured by an image capture device mounted to a boom carried by an agricultural machine and receiving a steering signal generated by a steering system of the agricultural machine. The method includes determining one or more boom trajectories corresponding to paths predicted to be traveled across the image for one or more points along the boom responsive to the steering signal, detecting one or more objects in the image, and determining whether the one or more detected objects are obstacles to movement of the boom responsive to the one or more determined boom trajectories and the one or more detected objects. The method further includes generating a warning signal responsive to a determination that the identified object is an obstacle to movement of the boom.

In some embodiments, detecting one or more objects in an image comprises detecting one or more of a fence post, a telephone line pole, a telephone line, agricultural equipment, or a fence.

In some embodiments, determining whether one or more detected objects are obstacles to movement of a boom responsive to one or more determined boom trajectories and one or more detected objects includes determining whether the one or more boom trajectories intersect with the one or more detected objects in the image.

In some embodiments, determining whether one or more detected objects are obstacles to movement of a boom responsive to one or more determined boom trajectories and one or more detected objects includes determining whether any of the one or more detected objects is between the boom tip trajectory and the agricultural machine.

In some embodiments, receiving image data corresponding to an image comprises receiving left image data corresponding to a left image and right image data corresponding to a right image. The left image is captured by a left image capture device mounted to a left end of boom from a forward-facing perspective of an operator of the agricultural machine. The right image is captured by a right image capture device mounted to a right end of the boom from the forward-facing perspective of the operator. In some embodiments, a method also includes displaying, simultaneously on an electronic display, the left image and the right image with one or more trajectory lines corresponding to one or more determined boom trajectories overlaying the left image and the right image.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a simplified perspective view of an agricultural application machine, which may also be referred to as an agricultural machine or a sprayer;
FIG. 2 is a simplified cross-sectional view of a boom arm, which may be one of the boom arms of the sprayer of FIG. 1;
FIG. 3 is an example of a cab view of the operator cabin of the sprayer of FIG. 1;
FIG. 4 is a block diagram of an imaging system that may be used with the sprayer of FIG. 1, according to some embodiments;
FIG. 5 is an example of an electronic display of FIG. 1, FIG. 3, and FIG. 4 displaying an image captured by an image capture device (FIG. 1, FIG. 2, FIG. 4);
FIG. 6 is a block diagram of an example of an imaging system for the sprayer of FIG. 1;
FIG. 7 is a flowchart illustrating a method of operating an imaging system (e.g., the imaging system of FIG. 4), according to some embodiments; and
FIG. 8 is a block diagram of circuitry that, in some embodiments, may be used to implement various functions, operations, acts, processes, and/or methods disclosed herein.

### DETAILED DESCRIPTION

The illustrations presented herein are not actual views of any particular machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "real time" refers to processing and displaying information with little to no human-perceptible delay (e.g., one second or less of delay) following a triggering event to trigger the processing and displaying of information. For example, where trajectory lines for predicted trajectories of components of a boom carried by an agricultural machine are displayed on an electronic display, these trajectory lines may be updated in real time or in at least substantially real time responsive to changes in steering detected via a steering signal from a steering system. In this example, the time between a detection of a change in steering and an update in the displayed trajectory lines may be little to no delay in the perception of a human (e.g., one second or less).

As used herein, the term "substantially" in reference to a given parameter, property, or condition means and includes to a degree that one of ordinary skill in the art would understand that the given parameter, property, or condition is met with a small degree of variance, such as, for example, within acceptable manufacturing tolerances. By way of example, depending on the particular parameter, property, or condition that is substantially met, the parameter, property, or condition may be at least 90% met, at least 95% met, or even at least 99% met.

As used herein, the term "agricultural machine" refers to any machine that may be used during an agricultural process (e.g., planting, spraying, harvesting, cutting, baling, spreading, etc.) and may include self-propelled vehicles and towed agricultural implements configured to be towed by a vehicle (e.g., a tractor). Agricultural machines may include tractors, spreaders, planters, air carts, air seeders, harvesters, combines, balers, etc.

As used herein, the term "boom" refers to an at least substantially horizontally-extending support member, which may be carried by an agricultural machine. Tools such as spray nozzles and image capture devices may be secured to a boom according to embodiments disclosed herein.

As used throughout, ranges are used as shorthand for describing each and every value that is within the range. Any value within the range can be selected as the terminus of the range.

Opening a field (i.e., starting to spray a field) is one of the most technical aspects of sprayer operation, and may involve a relatively high level of operator skill. When opening a field, an operator may in some instances first spray around an outside edge of the field before then traversing back and forth across the field to spray the rest of the field. GPS tracking may be helpful in navigating the back and forth traversing of the field, but may be less helpful in navigating around an outside edge of the field while opening the field, which may be more encumbered by obstacles (e.g., bushes, trees, fences, power line poles, etc.). For example, GPS systems may not provide information regarding locations of these obstacles near the outside edge of the field. Despite well-designed cab layout in agricultural machines used for chemical spraying, it may be difficult to determine exactly where a boom tip or spray nozzle is relative to obstacles where the boom tip may be 50 to 60 feet from the cab. Extreme distances such as these of the operator to the boom tip may result in parallax, or an inaccurate perception of the position of the boom tip or other parts of the boom.

Disclosed herein are imaging systems that display, on an electronic display visible to an operator of an agricultural machine (e.g., mounted to an interior of an operator cabin of the agricultural machine), an image captured by an image capture device mounted to a boom carried by the agricultural machine. The image is taken from a boom perspective that is remote from the operator of the agricultural machine. The imaging systems may also display one or more trajectory lines superimposed over the image. The one or more trajectory lines illustrate the one or more boom trajectories. The boom perspective of the image displayed on the electronic display may assist the operator in knowing more accurately where the boom tip and tools mounted the boom are located relative to obstacles, reducing the operator's reliance on peripheral vision and experience to know the location of the boom tip and tools. The one or more trajectory lines superimposed over the image may also give the operator insight as to whether the boom tip and tools will avoid obstacles and whether targets for tools such as chemical sprayers will be properly reached (e.g., sprayed). This added perspective and insight may enable even less experienced operators to safely and effectively operate an agricultural machine such as a sprayer.

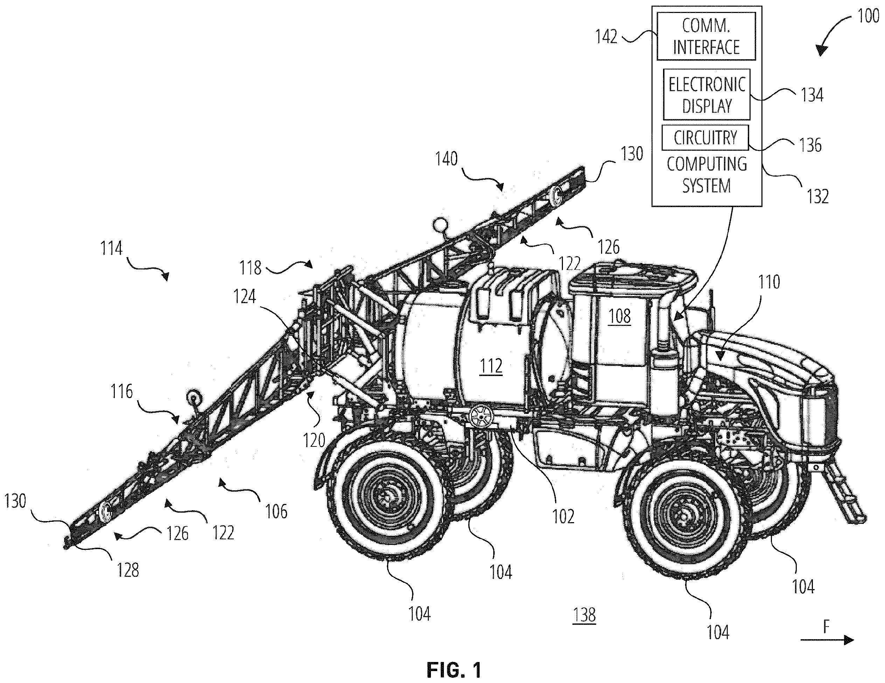

FIG. 1 is a simplified perspective view of an agricultural application machine 100, which may also be referred to as an agricultural machine 100 or a sprayer 100. The sprayer 100 may comprise a self-propelled sprayer. In other embodiments, the sprayer 100 comprises a trailed sprayer.

The sprayer 100 may include a chassis 102, a plurality of wheels 104 or other ground-engaging elements supporting the chassis 102 above a surface of a ground 138. When referring to wheels 104 herein, it will be understood that each wheel 104 may include an associated tire configured to engage the ground 138. The sprayer 100 further includes an application system 106, an operator cabin 108, and an engine compartment 110. The operator cabin 108 or "cab" is supported on the chassis 102 and shown in a forward direction F relative to the application system 106, though parts of the application system 106 may alternatively be at the front of the sprayer 100.

The application system 106 is supported on the chassis 102 and may include at least one storage tank 112 (e.g., a liquid tank, a tank storing a solid material) and a delivery system for applying a material (e.g., a liquid, such as a liquid fertilizer; or a solid) from the storage tank 112 to crops and/or a field traversed by the sprayer 100. As used herein, delivering a material to a field means and includes delivering (e.g., applying) the material to the field and/or to crops (e.g., row crops) in the field.

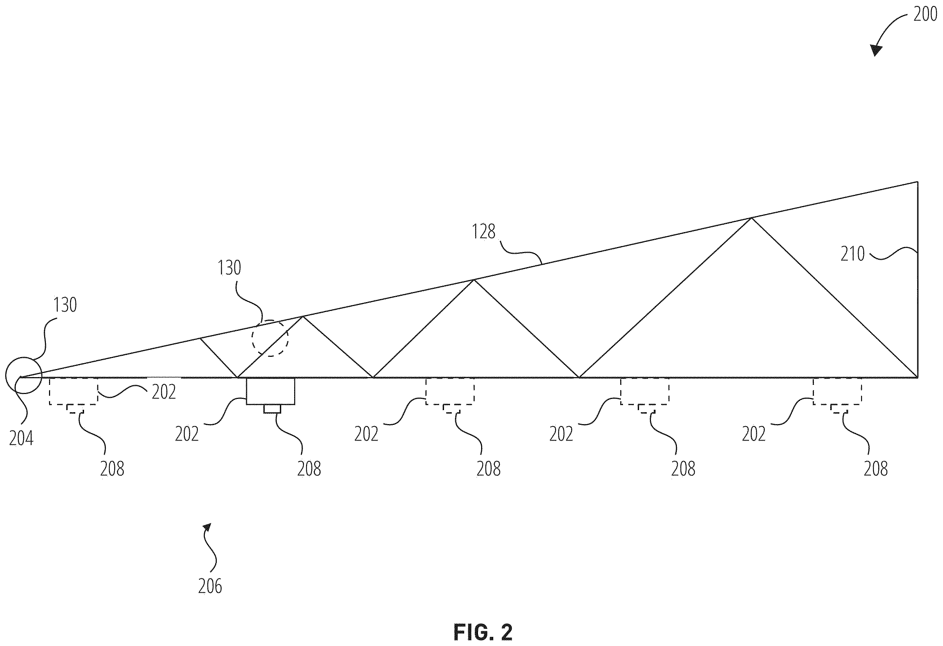

The application system 106 includes a boom 114 carried by the sprayer 100. The boom 114 includes a pair of boom arms, a right boom arm 116 and a left boom arm 140, extending from a center segment 118 of the boom 114. The boom 114 supports one or more spray mechanisms 122 (e.g., attached to the right boom arm 116 and the left boom arm 140) in fluid communication with the storage tank 112. The one or more spray mechanisms 122 may include a plurality of material applicators, such as spray nozzles (e.g., nozzles 208 of FIG. 2), configured to provide the material from the storage tank 112 to the field. Hoses (e.g., conduits, tubes) may extend from the storage tank 112 along the boom 114 and to the nozzles of the spray mechanism. The right boom arms 116 are illustrated in an extended configuration in FIG. 1, each laterally extending from the chassis 102 in a direction substantially perpendicular to the forward direction F. A boom positioning mechanism 120 may be configured to adjust a distance between the chassis 102 and the boom 114, such as with actuators 124, which may comprise hydraulic actuators, pneumatic actuators, or electrical actuators. In addition, the boom positioning mechanism 120 may be configured to laterally extend the boom 114 into the configuration illustrated in FIG. 1, and to retract the boom 114, such as during transportation of the sprayer 100.

The sprayer 100 includes on or more image capture devices 130 mounted to the boom. By way of non-limiting example, the one or more image capture devices 130 may be mounted at tips (e.g., tip 204 of FIG. 2) of the boom 114. Also by way of non-limiting example, the one or more image capture devices 130 may be mounted at other points along the boom 114 (e.g., at a tool such as a spray mechanism 122) in addition to or instead of at the tips of the boom 114. In some embodiments, multiple image capture devices 130 may be spaced along the boom 114, and images from the image capture devices 130 may be combined into a composite image depicting multiple views. By way of non-limiting example, a first image capture device 130 may provide a forward-facing perspective, and a second image capture device 130 may provide a side-facing perspective. An image of the forward-facing perspective and an image of the side-facing perspective may be combined into a composite image depicting both the forward-facing and side-facing perspectives.

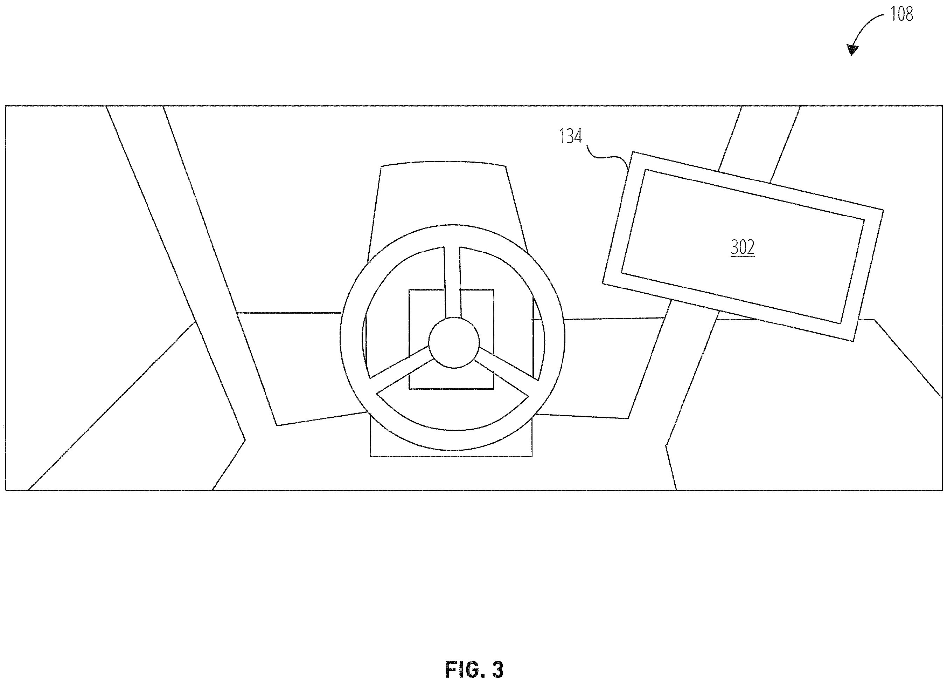

An image capture device 130 may include one or more of a camera, an imaging radar device, a point cloud device, or a light detection and ranging (LiDAR) device. Non-limiting examples of cameras include one or more of a 3D laser scanner (LiDAR), a 2D laser scanner (LiDAR), a charge-couple device (CCD) sensor, a complementary metal oxide semiconductor (CMOS) sensor, a stereoscopic camera, a monoscopic camera, an infrared (IR) camera, a short-wave infrared (SWIR) camera, a digital single-reflex camera, or a radar camera. The one or more image capture devices 130 are configured to capture images (e.g., the image 302 of FIG. 3). In some embodiments, multiple different types of image capture devices 130 may be used, and different types of images from these different image capture devices 130 may be used separately or may be combined into composite images.

In some embodiments the one or more image capture devices 130 are oriented in the forward direction F to capture images from boom perspectives that are remote from a perspective of an operator operating the sprayer 100 in the operator cabin 108. The boom perspectives may be at mounting points of the one or more image capture devices 130 along the boom 114. By way of non-limiting example, an image capture device 130 mounted at the tip of the boom 114 may capture images from a boom tip perspective, facing in the forward direction F.

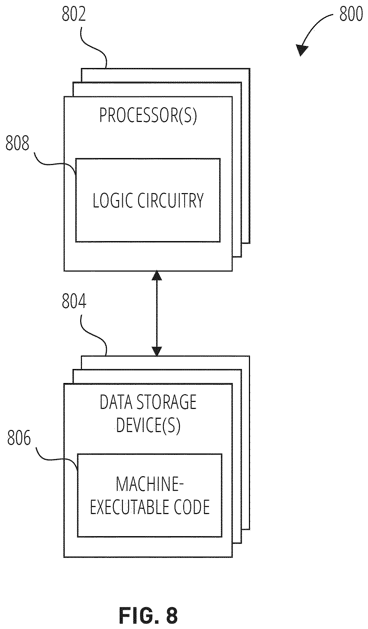

In some embodiments, a computing system 132 is located within the operator cabin 108. The computing system 132 includes a communication interface 142 configured to receive the images from the image capture devices 130 (e.g., through a wired or wireless communication interface). The computing system 132 also includes an electronic display 134 operably coupled (e.g., a wired or wireless coupling) to circuitry 136 (e.g., the circuitry 800 of FIG. 8) configured to perform operations disclosed herein. By way of non-limiting example, the electronic display may include a standalone electronic display (e.g., a computer monitor) or may include a tablet computer device in communication with the circuitry 136. The electronic display 134 is mounted within the operator cabin 108 to be visible to an operator while the operator operates the sprayer 100. In some embodiments, the circuitry 136 is configured to facilitate one or more control operations of the sprayer 100, such as one or more control operations of the boom 114 and the application system 106.

The circuitry 136 is configured to control the electronic display 134 to display information to an operator of the sprayer 100. For example, the circuitry 136 is configured to control the electronic display 134 to display images captured by the one or more image capture devices 130. Since the images are captured from a boom perspective that is different from a perspective of the operator in the operator cabin 108, the operator may more accurately see how a location of the boom tip and/or locations of spray mechanisms 122 relate to locations of objects (e.g., obstacles) in the images than if the operator were only relying on the operator perspective.

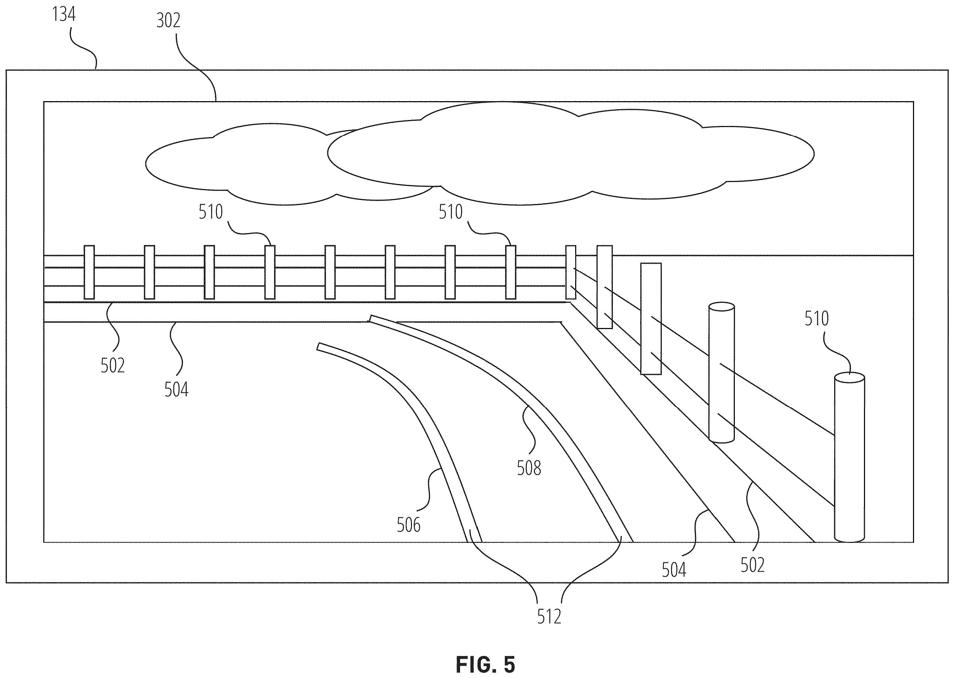

The circuitry 136 is also configured to determine one or more boom trajectories corresponding to paths predicted to be traveled across the image for one or more points along the boom 114 responsive to a steering signal received from a steering system of the sprayer 100. The steering signal may indicate a steering direction that the sprayer 100 is steered in (e.g., by a steering wheel manipulated by an operator in the operator cabin 108) and/or a speed (e.g., a forward speed) of travel by the sprayer 100 (e.g., as indicated by a speedometer of the sprayer 100). The circuitry 136 is configured to control the electronic display 134 to display one or more trajectory lines superimposed over the image. The one or more trajectory lines illustrate the one or more boom trajectories. In some embodiments, the one or more trajectory lines include a tool trajectory line (e.g., the tool trajectory line 506 of FIG. 5) illustrating a tool trajectory predicted to be traveled by a tool (e.g., a spray mechanism 122) mounted to the boom 114. In some embodiments, the circuitry 136 may be directed to display the images and/or the trajectory lines responsive to manual controls received from the operator of the sprayer 100. In some embodiments, the circuitry 136 may display the images and/or the trajectory lines responsive to detection of an object that may be an obstacle to movement of the boom 114, detection of an end of the field (e.g., using green-on-brown imaging), and/or detection of an edge of crops (e.g., using green-on-green imaging).

In some embodiments, the circuitry 136 may also be configured to detect, from an image captured by an image capture device 130, an end of field (e.g., the end of field 502 illustrated in FIG. 5). By way of non-limiting example, the circuitry 136 may be configured to detect, in an image captured by an image capture device 130, the end of field using green-on-brown imaging. As a specific, non-limiting example, a detection of the end of the field may assist the operator in applying chemical to crops in the field and not to a grass line or other items at the edge of the field. As another specific, non-limiting example, a detection of the end of the field may assist the operator in applying chemical to a grass line or other items at the edge of the field and not to crops in the field. Also, a higher concentration of potential obstacles to movement of the boom 114 may be located at the end of the field than would be located elsewhere. Accordingly, the circuitry 136 may use a detection of an end of field in the image to trigger object detection. The circuitry 136 may use object detection to identify objects that may potentially present obstacles to movement of the boom 114. For example, the circuitry 136 may identify an object in an image captured by an image capture device 130 responsive to detection of the end of the field.

In some embodiments, the electronic display 134 may operate as a user interface through which the operator activates steering control of the sprayer 100, control of the boom 114, and/or control over a user interface for. In such embodiments, the circuitry 136 may control the electronic display 134 to display graphical user interface user-selectable options. By way of non-limiting example, the electronic display 134 may include a touch screen device configured to receive inputs from the operator of the sprayer 100. Also by way of non-limiting example, the circuitry 136 may be operably coupled to one or more input devices (e.g., a pointing device such as a mouse or track pad, a keyboard, one or more buttons, etc.) to receive inputs from the operator. In some embodiments, the circuitry 136 may be configured to distinguish, in an image captured by an image capture device 130, between the end of the field an already emerged crop plants using green-on-green imaging. By way of non-limiting example, green-on-green imaging may be used to distinguish between late season crops (e.g., corn) that have grown to a higher height (e.g., more mature, fully mature, etc.) than other vegetation at the end of field (e.g., a grass line).

In some embodiments, the circuitry 136 may be configured to generate a warning signal responsive to a determination that an identified object is an obstacle to movement of the boom 114. By way of non-limiting example, the warning signal may be configured to trigger an alarm to alert an operator of the sprayer 100 that the boom 114 is moving towards an obstacle (e.g., using one or more of an audible alarm or a visible alarm). In some embodiments, the warning signal is configured to trigger activation of the electronic display to display an image captured by one of the image capture devices 130 and the trajectory lines superimposed over the image. In some embodiments, the warning signal is configured to trigger provision of one or more driving suggestions to an operator of the sprayer 100. By way of non-limiting examples, the driving suggestions may include a suggestion to stop movement of the sprayer 100, retract an arm of the boom 114, turn in an indicated direction, or other suggestions. These suggestions may be displayed as text on the electronic display 134 and/or announced as verbal directions audibly (e.g., via speakers within the operator cabin 108 and/or on the electronic display 134). In some embodiments, the warning signal is configured to trigger one or more automatic collision prevention actions. By way of non-limiting examples, the warning signal may automatically trigger braking to slow or stop movement of the sprayer 100, steering correction to avoid a detected obstacle, retraction of an arm of the boom 114, other corrective action, or combinations thereof.

In some embodiments, the circuitry 136 may also be configured to control application of product (e.g., chemical product) via the application system 106, control steering of the sprayer 100, control the boom positioning mechanism 120 (e.g., to control the actuators 124) to control the height of the boom 114, and/or other operations.

FIG. 2 is a simplified cross-sectional view of a boom arm 200, which may be one of the boom arms 116, 140 of the sprayer 100 of FIG. 1. For clarity and ease of understanding the description, FIG. 2 does not illustrate the boom arm 200 operably coupled to the sprayer 100, such as to the chassis 102 of the sprayer 100. However, it will be understood that a proximal end 210 of the boom arm 200 may be operably coupled to the chassis 102 and/or operably coupled to the center segment 118 (FIG. 1) of the boom 114, which may be operably coupled to the chassis 102.

One or more chemical sprayers 202 of the spray mechanism 122 of FIG. 1 may be operably coupled (e.g., mounted, attached, secured, affixed, in communication with, fastened) to the boom arm 200, such as to a frame 128 of the boom arm 200. By way of non-limiting example, the at least one chemical sprayer 202 is fastened to (e.g., with fasteners, such as nuts, bolts, etc.) the boom arm 200, such as to the frame 128. The chemical sprayers 202 may include a nozzle 208 for spraying chemical product (e.g., from storage tank 112 of FIG. 1) as the sprayer 100 moves across a field. By way of non-limiting examples, the nozzles 208 may be pointed downward toward the ground, laterally outward away from the sprayer 100, or in any of a variety of different directions, as disclosed in U.S. Provisional Patent Application No. 63/566,509, filed March 18, 2024, the entire disclosure of which is hereby incorporated herein by this reference. In some embodiments, at least one chemical sprayer 202 is operably coupled to each boom arm 116, 140 (FIG. 1). As illustrated in FIG. 2, multiple chemical sprayers 202 may be spaced along the boom arm 200.

One or more image capture devices 130 may also be operably coupled (e.g., mounted, attached, secured, affixed, in communication with, fastened) to the boom arm 200, such as to the frame 128 of the boom arm 200. In some embodiments, the one or more image capture devices 130 may be forward facing (e.g., in the forward direction F illustrated in FIG. 1). In some embodiments, the one or more image capture device 130 are operably coupled to a front side of the boom arm 200. In some embodiments an image capture device 130 may include a wide-angle lens to enable capture of images having a perspective of a forward-facing direction that extends laterally away from the sprayer 100 (e.g., to include a fence line in a captured image). In some embodiments, some of the one or more image capture devices 130 may be forward facing and others of the one or more image capture devices 130 may face in other directions (e.g., laterally). In some embodiments, images captured from different image capture devices 130 having different perspectives (e.g., forward facing, laterally facing) or image types (e.g., two dimensional images, three-dimensional images, visible light images, infrared images, etc.) may be combined together to generate a composite image, which may be displayed on the electronic display 134 (FIG. 1).

FIG. 3 is an example of a cab view of the operator cabin 108 of the sprayer 100 of FIG. 1. As discussed above, the computing system 132 includes an electronic display 134 mounted in the operator cabin 108 within view of an operator of the sprayer 100. FIG. 3 illustrates the electronic display 134 displaying an image 302 captured by one of the one or more image capture devices 130 of FIG. 1 and FIG. 2. With the electronic display 134 mounted in the operator cabin 108 in view of the operator, the operator may observe the image 302 while operating the sprayer 100, providing the operator insight as to a boom perspective that is remote from the operator's perspective within the operator cabin 108. Accordingly, the operator may be enabled to observe obstacles to motion of the boom 114 (FIG. 1) as the 100 moves through a field. Also, the operator may gain a more accurate idea of what parts of the field the chemical sprayers 202 (FIG. 2) are covering with chemical product from the storage tank 112 (FIG. 1).

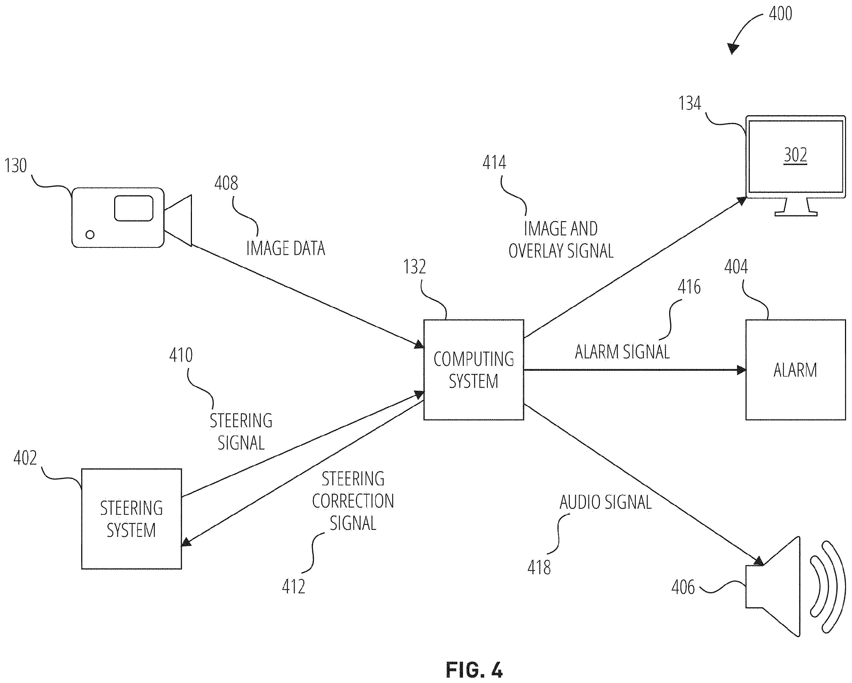

FIG. 4 is a block diagram of an imaging system 400 that may be used with the sprayer 100 of FIG. 1, according to some embodiments. The imaging system 400 includes the image capture devices 130 (FIG. 1, FIG. 2) mounted to a boom 114 (FIG. 1, FIG. 2) and the computing system 132 including the electronic display 134 (FIG. 1, FIG. 3) discussed above. In some embodiments, the imaging system 400 may also include a steering system 402, an audio transducer 406, and/or an alarm 404.

The imaging system 400 is configured to display, on the electronic display 134 within an operator cabin (e.g., the operator cabin 108 of FIG. 1 and FIG. 3) of an agricultural machine (e.g., the sprayer 100 of FIG. 1), an image 302 captured by an image capture device 130 mounted to a boom 114 carried by the agricultural machine (e.g., the sprayer 100 of FIG. 1) (or a composite image combined from multiple different image capture devices 130). By way of non-limiting example, the image 302 is taken from a boom perspective that is remote from an operator of the agricultural machine. The computing system 132 is also configured to determine one or more boom trajectories corresponding to paths predicted to be traveled across the image 302 for one or more points (e.g., the tip 204 of the boom 114, at tools mounted to the boom, other points, etc.) along the boom 114 responsive to a steering signal 410 (e.g., indicating a steering direction and/or a speed of travel of the sprayer 100) received from a steering system 402 of the agricultural machine. The steering system 402 may include steering mechanisms, a steering angle sensor, and a speed sensor (e.g., a speedometer) to enable detection of a position and movement of the steering wheel and a speed of travel of the sprayer 100 (FIG. 1). The computing system 132 is further configured to display, on the electronic display 134, one or more trajectory lines 512 (FIG. 5) superimposed over the image 302. The one or more trajectory lines 512 illustrate estimates of the one or more boom trajectories.

In some embodiments, different degrees of rotational displacement of a steering wheel of the sprayer 100 may be associated with different curvatures of the one or more trajectory lines 512. Accordingly, the circuitry 136 may be configured to generate the trajectory lines 512 by applying the curvature associated with a rotational displacement of the steering wheel indicated by the steering signal 410. By way of non-limiting example, straight forward-oriented trajectory lines may be associated with a zero rotational displacement of the steering system. Also by way of non-limiting example, the greater the rotational displacement indicated by the steering system, the greater the curvature of the trajectory lines. A proper association between curvature of the trajectory lines and rotational displacement indicated by the steering signal may be established via a calibration operation (e.g., performed by a manufacturer, periodically performed while in operation, performed responsive to a manual trigger, etc.).

In some embodiments, different speeds of travel of the sprayer 100 may also influence a projection an/or curvature of the one or more trajectory lines 512. Accordingly, the circuitry 136 may be configured to generate the trajectory lines 512 by applying a curvature and projection associated with a rotational displacement of the steering wheel and the speed of travel of the sprayer 100, which may both be indicated by the steering signal 410. By way of non-limiting example, a faster speed of travel may correlate to a larger turn radius than a slower speed of travel. In some embodiments, machine vision and artificial intelligence may be used to determine a curvature and/or projection of the one or more trajectory lines 512 based on the steering wheel rotational displacement and/or the speed of travel (e.g., indicated by the steering signal 410). For example, an artificial intelligence model executed by the circuitry 132 (FIG. 1) may be trained to determine a curvature and/or projection of the trajectory lines 512. In some embodiments, feedback from images 302 captured by the one or more image capture devices 130 may be used to determine the accuracy of trajectory lines 512 as the sprayer 100 travels, and the artificial intelligence model may be modified to improve accuracy of the trajectory lines 512 based on the feedback.

The computing system 132 is configured to dynamically update the one or more trajectory lines in at least substantially real time responsive to changes in steering and/or speed of the agricultural machine. These changes in steering and/or speed may be detected using the steering signal 410. Accordingly, as the operator increases or decreases the rotational displacement of the steering wheel and/or reduces or increases the speed of travel, the curvature of the trajectory lines may correspondingly increase or decrease to enable the operator to see how the trajectory of the different points along the boom 114 changes with changes in steering wheel displacement and/or speed of travel.

The computing system 132 is also configured to identify an object in an image 302 captured by the image capture device 130. An image 302 may in some instances be displayed by the electronic display 134 and may also be used to identify an object in the image 302. In some instances, the image 302 may not be displayed by the electronic display 134 and may instead be processed for object detection. The computing system 132 may be configured to use any of various image processing techniques known in the art to identify objects. By way of non-limiting examples, the computing system 132 may be configured to use one or more of edge detection, band ratio, skeletonization, filtering, thresholding, texture analysis, or other image processing techniques to identify objects in the image 302. In some embodiments, the computing system 132 may use an artificial intelligence model trained to recognize objects commonly encountered in agricultural fields (e.g., trees, shrubs, fence posts, fences, power lines, power line poles, agricultural equipment, etc.). The computing system 132 may apply the image 302 to the trained artificial intelligence model to detect objects in the image 302.

In some embodiments, where additional sensors (e.g., an ultrasonic, radar, or other spatial sensors) are used for the image capture devices 130, image data 408 from these additional sensors may be used by the computing system 132 to determine how far a sprayer or boom tip is from an object identified in the image 302. Image data 408 in these embodiments may include more than data corresponding to two-dimensional images. For example, image data may include point cloud data, radar data, LiDAR data, other data, or combinations thereof.

The computing system 132 is configured to determine whether the identified object is an obstacle to movement of the boom 114. By way of non-limiting example, in embodiments where a trajectory line is generated for a tip of the boom 114 (e.g., boom tip trajectory line 508 of FIG. 5), an identified object that is positioned between the boom tip trajectory line and the sprayer 100 may be determined to be an obstacle to movement of the boom 114. In some embodiments, the computing system 132 may perform predictive calculations (e.g., using artificial intelligence models) to predict when the sprayer 100 or the boom 114 may impact an obstacle given parameters such as current speed, trajectory, and distance to an identified obstacle.

The computing system 132 is further configured to generate a warning signal (e.g., an alarm signal 416, an audio signal 418, a steering correction signal 412, etc.) responsive to a determination that the identified object is an obstacle to movement of the boom 114. By way of non-limiting example, the warning signal may be an alarm signal 416 configured to trigger an alarm 404 to alert an operator of the sprayer 100 that the boom 114 is moving towards an obstacle (e.g., using one or more of an audible alarm or a visible alarm). In some embodiments, the warning signal may be an audio signal and/or part of the image and overlay signal 414 to trigger provision of one or more driving suggestions to an operator of the sprayer 100. By way of non-limiting examples, the driving suggestions may include a suggestion to stop movement of the sprayer 100, retract an arm of the boom 114, turn in an indicated direction, or other suggestions. These suggestions may be displayed as text on the electronic display 134 (e.g., provided via the image and overlay signal 414), announced as verbal directions audibly (e.g., by the audio transducer 406 as controlled via the audio signal 418). In some embodiments, the warning signal is configured to trigger one or more automatic collision prevention actions. By way of non-limiting examples, the warning signal may be a steering correction signal 412 configured to automatically adjust the steering system 402 to avoid the identified object. Other warning signals may include a braking signal to slow or stop movement of the sprayer 100, or a boom arm retraction signal to trigger retraction of an arm of the boom 114.

FIG. 5 is an example of the electronic display 134 of FIG. 1, FIG. 3, and FIG. 4 displaying an image 302 captured by an image capture device 130 (FIG. 1, FIG. 2, FIG. 4). As previously discussed, the computing system 132 (FIG. 1, FIG. 4) is configured to determine one or more boom trajectories corresponding to paths predicted to be traveled across the image 302 for one or more points along the boom 114 (FIG. 1, FIG. 2) responsive to a steering signal 410 (FIG. 4) received from a steering system 402 (FIG. 4) of the agricultural machine (e.g., the sprayer 100 of FIG. 1). The computing system 132 is also configured to display, on the electronic display 134, the image 302 and one or more trajectory lines 512 superimposed over the image 302. The one or more trajectory lines 512 illustrate estimates of the one or more boom trajectories. The trajectory lines 512 may enable an operator to see an estimated trajectory of points along the boom 114 (FIG. 1, FIG. 2).

In some embodiments, the one or more trajectory lines 512 include a tool trajectory line 506 illustrating a tool trajectory predicted to be traveled by a tool (e.g., a chemical sprayer 202 of FIG. 2) mounted to the boom 114. In some embodiments, the one or more trajectory lines 512 include a boom tip trajectory line 508 illustrating a boom tip trajectory predicted to be traveled by a tip 204 (FIG. 2) of the boom 114. As previously discussed, the computing system 132 is configured to dynamically update the trajectory lines 512 in at least substantially real time responsive to changes in steering of the agricultural machine (e.g., the sprayer 100) detected using the steering signal (e.g., the steering signal 410 of FIG. 4).

The image 302 of FIG. 5 also illustrates an end of field 502 (e.g., which may be detected in the image 302 using green-on-brown imaging) and an emerged crop edge 504 (e.g., which may be detected in the image 302 using green-on-green imaging). The image 302 further illustrates objects (e.g., fence post 510) that may be detected by the computing system 132 and analyzed to determine whether the objects are obstacles to movement of the boom 114 at the current trajectory.

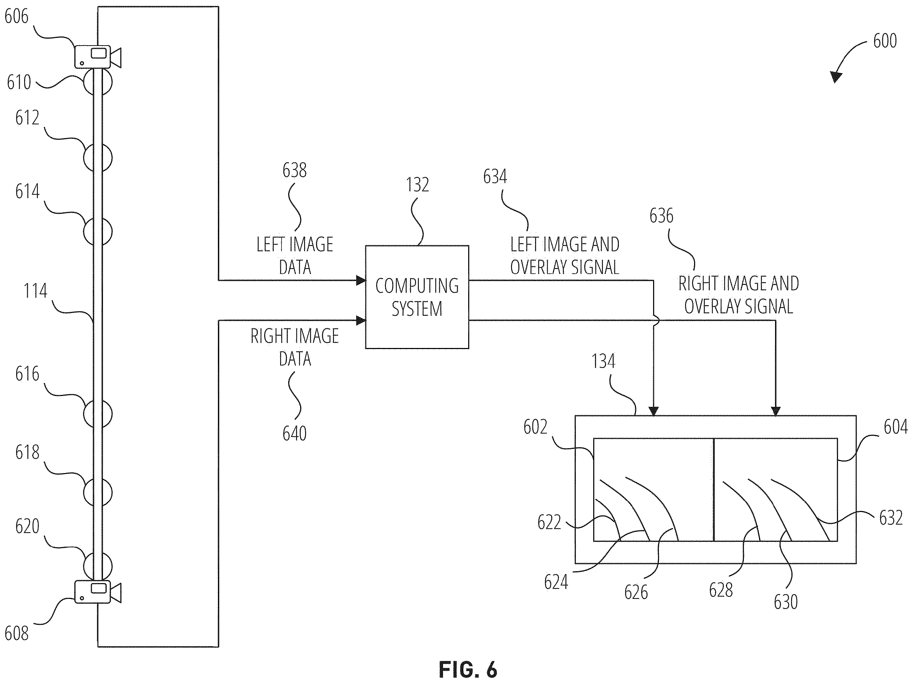

FIG. 6 is a block diagram of an example of an imaging system 600 for the sprayer 100 of FIG. 1. The imaging system 600 includes the computing system 132 and the electronic display 134 discussed above (e.g., FIG. 1, FIG. 3, and FIG. 4). The imaging system 600 also includes a left image capture device 606 (left from the perspective of an operator in the operator cabin 108 of FIG. 1 facing in the forward direction F) and a right image capture device 608 (right from the perspective of the operator in the operator cabin 108) mounted to the boom 114 of FIG. 1. By way of non-limiting example, the left image capture device 606 and the right image capture device 608 may be mounted to opposite ends of the boom 114. The left image capture device 606 and the right image capture device 608 are configured to capture a left image 602 and a right image 604, respectively, and provide corresponding left image data 638 and right image data 640 to the computing system 132.

The computing system 132 is configured to provide, to the electronic display 134, a left image and overlay signal 634 and a right image and overlay signal 636 corresponding to the left image data 638 and the right image data 640, respectively. The left image and overlay signal 634 and the right image and overlay signal 636 are configured to cause the electronic display 134 to display the left image 602 and the right image 604, respectively (e.g., simultaneously as illustrated in FIG. 6 or separately such as via a toggling option that enables the operator to selectively switch between the images) along with any overlay information.

In some embodiments, the overlay information displayed by the electronic display 134 over the left image 602 and the right image 604 may include trajectory lines. For example, the boom 114 may have several chemical sprayers similar to the chemical sprayers 202 of FIG. 2 mounted thereto. In the example illustrated in FIG. 6, the boom 114 may have a first left chemical sprayer 610, a second left chemical sprayer 612, a third left chemical sprayer 614, a first right chemical sprayer 616, a second right chemical sprayer 618, and a third right chemical sprayer 620 attached thereto. The left image and overlay signal 634 and the right image and overlay signal 636 may cause the electronic display 134 to display a first left trajectory line 622, a second left trajectory line 624, a third left trajectory line 626, a first right trajectory line 628, a second right trajectory line 630, and a third right trajectory line 632 corresponding to estimated trajectories of the first left chemical sprayer 610 (and the left tip of the boom 114), the second left chemical sprayer 612, the third left chemical sprayer 614, the first right chemical sprayer 616, the second right chemical sprayer 618, and the third right chemical sprayer 620 (and the right tip of the boom 114), respectively.

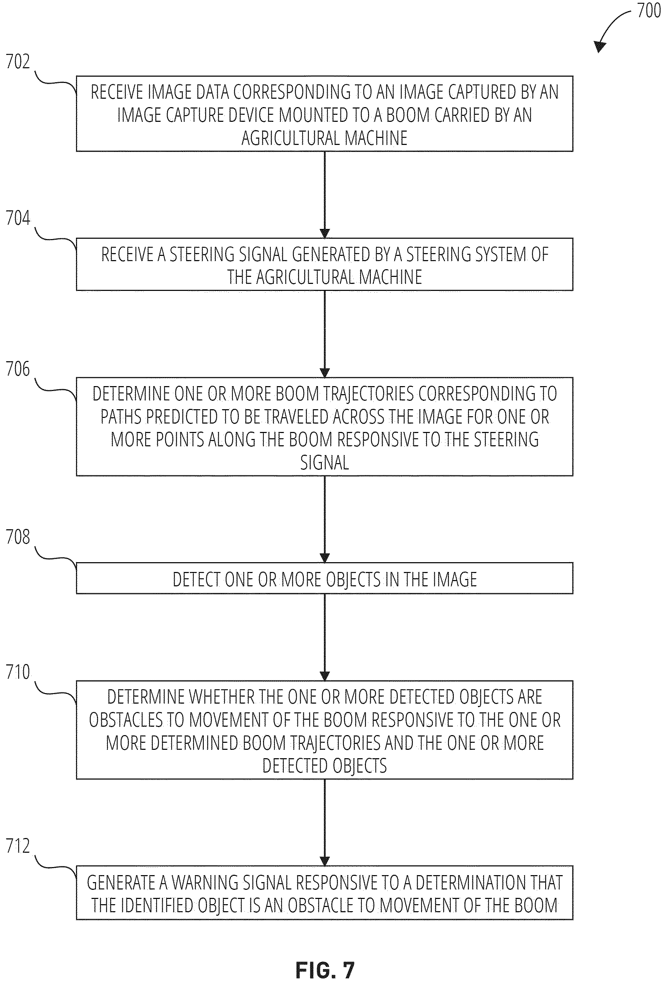

FIG. 7 is a flowchart illustrating a method 700 of operating an imaging system (e.g., the imaging system 400 of FIG. 4), according to some embodiments. At operation 702, the method 700 may include receiving (e.g., by circuitry 136 of FIG. 1) image data (e.g., via the communication interface 142 of FIG. 1) corresponding to an image (e.g., the image 302 of FIG. 3, FIG. 4, and FIG. 5) captured by an image capture device (e.g., one of the image capture devices 130 of FIG. 1, FIG. 4) mounted to a boom (e.g., the boom 114 of FIG. 1) carried by an agricultural machine (e.g., the sprayer 100 of FIG. 1). By way of non-limiting example, the image data may correspond to two-dimensional images, three-dimensional images, or may include spatial information such as point cloud data, radar data, or LiDAR data. In some embodiments, receiving image data corresponding to an image comprises receiving left image data (e.g., the left image data 638 of FIG. 6) corresponding to a left image (e.g., the left image 602 of FIG. 6) and right image data (e.g., the right image data 640 of FIG. 6) corresponding to a right image (e.g., the right image 604 of FIG. 6). The left image may be captured by a left image capture device (e.g., the left image capture device 606 of FIG. 6) mounted to a left end of boom from a forward-facing perspective of an operator of the agricultural machine. The right image may be captured by a right image capture device (e.g., the right image capture device 608 of FIG. 6) mounted to a right end of the boom from the forward-facing perspective of the operator.

At operation 704, the method 700 includes receiving a steering signal (e.g., the steering signal 410 of FIG. 4) generated by a steering system (e.g., the steering system 402 of FIG. 4) of the agricultural machine. At operation 706, the method 700 includes determining one or more boom trajectories corresponding to paths predicted to be traveled across the image for one or more points along the boom responsive to the steering signal.

At operation 708, the method 700 includes detecting one or more objects in the image. In some embodiments, detecting the one or more objects in the image includes detecting one or more of a fence post, a telephone line pole, a telephone line, agricultural equipment, or a fence.

At operation 710, the method 700 includes determining whether the one or more detected objects are obstacles to movement of the boom responsive to the one or more determined boom trajectories and the one or more detected objects. In some embodiments, determining whether the one or more detected objects are obstacles to movement of the boom responsive to the one or more determined boom trajectories and the one or more detected objects comprises determining whether the one or more boom trajectories intersect with the one or more detected objects in the image. In some embodiments, determining whether the one or more detected objects are obstacles to movement of the boom responsive to the one or more determined boom trajectories and the one or more detected objects comprises determining whether any of the one or more detected objects is between a boom tip trajectory and the agricultural machine. At operation 712, the method 700 includes generating a warning signal responsive to a determination that the identified object is an obstacle to movement of the boom.

It will be appreciated by those of ordinary skill in the art that functional elements of embodiments disclosed herein (e.g., functions, operations, acts, processes, and/or methods) may be implemented in any suitable hardware, software, firmware, or combinations thereof. FIG. 8 illustrates non-limiting examples of implementations of functional elements disclosed herein. In some embodiments, some or all portions of the functional elements disclosed herein may be performed by hardware specially configured for carrying out the functional elements.

FIG. 8 is a block diagram of circuitry 800 that, in some embodiments, may be used to implement various functions, operations, acts, processes, and/or methods disclosed herein. The circuitry 800 includes one or more processors 802 (sometimes referred to herein as "processors 802") operably coupled to one or more data storage devices (sometimes referred to herein as "storage 804"). The storage 804 includes machine-executable code 806 stored thereon and the processors 802 include logic circuitry 808. The machine-executable code 806 includes information describing functional elements that may be implemented by (e.g., performed by) the logic circuitry 808. The logic circuitry 808 is adapted to implement (e.g., perform) the functional elements described by the machine-executable code 806. The circuitry 800, when executing the functional elements described by the machine-executable code 806, should be considered as special purpose hardware configured for carrying out functional elements disclosed herein. In some embodiments the processors 802 may be configured to perform the functional elements described by the machine-executable code 806 sequentially, concurrently (e.g., on one or more different hardware platforms), or in one or more parallel process streams.

When implemented by logic circuitry 808 of the processors 802, the machine-executable code 806 is configured to adapt the processors 802 to perform operations of embodiments disclosed herein. For example, the machine-executable code 806 may be configured to adapt the processors 802 to perform at least a portion or a totality of the method 700 of FIG. 7. As another example, the machine-executable code 806 may be configured to adapt the processors 802 to perform at least a portion or a totality of the operations discussed for the computing system 132 of FIG. 1, FIG. 4, and/or FIG. 6 (e.g., operations performed by circuitry 136 of the computing system 132). As a specific, non-limiting example, the machine-executable code 806 may be configured to adapt the processors 802 to display, on an electronic display (e.g., the electronic display 134 of FIG. 3, FIG. 4, FIG. 5, and/or FIG. 6) visible to an operator of an agricultural machine (e.g., the sprayer 100 of FIG. 1), an image (e.g., the image 302 of FIG. 3, FIG. 4, and FIG. 5 and/or the left image 602 and the right image 604 of FIG. 6) captured by an image capture device (e.g., an image capture device 130 of FIG. 1, FIG. 2, and FIG. 4 and/or the left image capture device 606 and the right image capture device 608 of FIG. 6) mounted to a boom (e.g., the boom 114 of FIG. 1 and/or FIG. 6) carried by the agricultural machine. The image is taken from a boom perspective that is remote from an operator of the agricultural machine. As another specific, non-limiting example, the machine-executable code 806 may be configured to adapt the processors 802 to determine one or more boom trajectories (e.g., corresponding to the trajectory lines 512 of FIG. 5 and or first left trajectory line 622, second left trajectory line 624, third left trajectory line 626, first right trajectory line 628, second right trajectory line 630, and third right trajectory line 632 of FIG. 6). The boom trajectories correspond to paths predicted to be traveled across the image for one or more points along the boom responsive to a steering signal (e.g., the steering signal 410 of FIG. 4) received from a steering system (e.g., the steering system 402 of FIG. 4) of the agricultural machine. As a further specific, non-limiting example, the machine-executable code 806 may be configured to adapt the processors 802 to display, on the electronic display, the one or more trajectory lines superimposed over the image. The one or more trajectory lines illustrate the one or more boom trajectories. As yet a further specific, non-limiting example, the machine-executable code 806 may be configured to adapt the processors 802 to dynamically update the one or more trajectory lines in at least substantially real time responsive to changes in steering of the agricultural machine detected using the steering signal.

The machine executable machine-executable code 806 may also be configured to adapt the processors 802 to identify an object in an image captured by an image capture device, and determine whether the detected object is an obstacle to movement of the boom. The machine-executable code 806 is also configured to adapt the processors 802 to determine whether the identified object is an obstacle to movement of the boom and generate a warning signal responsive to a determination that the identified object is an obstacle to movement of the boom. In some embodiments, the machine-executable code 806 is configured to adapt the processors 802 to detect, from the image captured by the image capture device, an end of a field, and identify the object in the image captured by the image capture device responsive to a detection of the end of the field. In some embodiments, the machine-executable code 806 is configured to adapt the processors 802 to detect, in the image captured by the image capture device, the end of the field using green-on-brown imaging. In some embodiments, the machine-executable code 806 is configured to adapt the processors 802 to distinguish, in the image captured by the image capture device, between the end of the field and already emerged crop plants using green-on-green imaging. In some embodiments, the warning signal is configured to trigger an alarm to alert an operator of the agricultural machine that the boom is moving towards an obstacle. In some embodiments, the warning signal is configured to trigger provision of one or more driving suggestions to an operator of the agricultural machine.

The processors 802 may include a general purpose processor, a special purpose processor, a central processing unit (CPU), a microcontroller, a programmable logic controller (PLC), a digital signal processor (DSP), an application specific integrated circuit (ASIC), a field-programmable gate array (FPGA) or other programmable logic device, discrete gate or transistor logic, discrete hardware components, other programmable device, or any combination thereof designed to perform the functions disclosed herein. A general-purpose computer including a processor is considered a special-purpose computer while the general-purpose computer is configured to execute functional elements corresponding to the machine-executable code 806 (e.g., software code, firmware code, hardware descriptions) related to embodiments of the present disclosure. It is noted that a general-purpose processor (may also be referred to herein as a host processor or simply a host) may be a microprocessor, but in the alternative, the processors 802 may include any conventional processor, controller, microcontroller, or state machine. The processors 802 may also be implemented as a combination of computing devices, such as a combination of a DSP and a microprocessor, a plurality of microprocessors, one or more microprocessors in conjunction with a DSP core, or any other such configuration.

In some embodiments the storage 804 includes volatile data storage (e.g., random-access memory (RAM)), non-volatile data storage (e.g., Flash memory, a hard disc drive, a solid state drive, erasable programmable read-only memory (EPROM), etc.). In some embodiments the processors 802 and the storage 804 may be implemented into a single device (e.g., a semiconductor device product, a system on chip (SOC), etc.). In some embodiments the processors 802 and the storage 804 may be implemented into separate devices.

In some embodiments the machine-executable code 806 may include computer-readable instructions (e.g., software code, firmware code). By way of non-limiting example, the computer-readable instructions may be stored by the storage 804, accessed directly by the processors 802, and executed by the processors 802 using at least the logic circuitry 808. Also by way of non-limiting example, the computer-readable instructions may be stored on the storage 804, transferred to a memory device (not shown) for execution, and executed by the processors 802 using at least the logic circuitry 808. Accordingly, in some embodiments the logic circuitry 808 includes electrically configurable logic circuitry 808.

In some embodiments the machine-executable code 806 may describe hardware (e.g., circuitry) to be implemented in the logic circuitry 808 to perform the functional elements. This hardware may be described at any of a variety of levels of abstraction, from low-level transistor layouts to high-level description languages. At a high-level of abstraction, a hardware description language (HDL) such as an IEEE Standard hardware description language (HDL) may be used. By way of non-limiting examples, VERILOG^{™}, SYSTEMVERILOG^{™} or very large scale integration (VLSI) hardware description language (VHDL^{™}) may be used.

HDL descriptions may be converted into descriptions at any of numerous other levels of abstraction as desired. As a non-limiting example, a high-level description can be converted to a logic-level description such as a register-transfer language (RTL), a gate-level (GL) description, a layout-level description, or a mask-level description. As a non-limiting example, micro-operations to be performed by hardware logic circuits (e.g., gates, flip-flops, registers, without limitation) of the logic circuitry 808 may be described in a RTL and then converted by a synthesis tool into a GL description, and the GL description may be converted by a placement and routing tool into a layout-level description that corresponds to a physical layout of an integrated circuit of a programmable logic device, discrete gate or transistor logic, discrete hardware components, or combinations thereof. Accordingly, in some embodiments the machine-executable code 806 may include an HDL, an RTL, a GL description, a mask level description, other hardware description, or any combination thereof.

In embodiments where the machine-executable code 806 includes a hardware description (at any level of abstraction), a system (not shown, but including the storage 804) may be configured to implement the hardware description described by the machine-executable code 806. By way of non-limiting example, the processors 802 may include a programmable logic device (e.g., an FPGA or a PLC) and the logic circuitry 808 may be electrically controlled to implement circuitry corresponding to the hardware description into the logic circuitry 808. Also by way of non-limiting example, the logic circuitry 808 may include hard-wired logic manufactured by a manufacturing system (not shown, but including the storage 804) according to the hardware description of the machine-executable code 806.

Regardless of whether the machine-executable code 806 includes computer-readable instructions or a hardware description, the logic circuitry 808 is adapted to perform the functional elements described by the machine-executable code 806 when implementing the functional elements of the machine-executable code 806. It is noted that although a hardware description may not directly describe functional elements, a hardware description indirectly describes functional elements that the hardware elements described by the hardware description are capable of performing.

All references cited herein are incorporated herein in their entireties. If there is a conflict between definitions herein and in an incorporated reference, the definition herein shall control.

## Claims

1. A computing system, comprising:
one or more processors; and
one or more data storage devices having machine-executable code stored thereon, the machine-executable code to configure the one or more processors to:
display, on an electronic display visible to an operator of an agricultural machine, an image captured by an image capture device mounted to a boom carried by the agricultural machine, the image taken from a boom perspective that is remote from the operator of the agricultural machine;
determine one or more boom trajectories corresponding to paths predicted to be traveled across the image for one or more points along the boom responsive to a steering signal received from a steering system of the agricultural machine; and
display, on the electronic display, one or more trajectory lines superimposed over the image, the one or more trajectory lines illustrating the one or more boom trajectories.

2. The computing system of claim 1, wherein the one or more trajectory lines include a tool trajectory line illustrating a tool trajectory predicted to be traveled by a tool mounted to the boom; optionally wherein the tool is a chemical sprayer.

3. The computing system of claim 1, wherein the one or more trajectory lines include a boom tip trajectory line illustrating a boom tip trajectory predicted to be traveled by a tip of the boom.

4. The computing system of claim 1, wherein the machine-executable code is further to configure the one or more processors to dynamically update the one or more trajectory lines in at least substantially real time responsive to changes in steering of the agricultural machine, the changes in steering detected using the steering signal.

5. The computing system of claim 1, wherein the machine-executable code is further to configure the one or more processors to:
identify an object in the image;
determine whether the identified object is an obstacle to movement of the boom; and
generate a warning signal responsive to a determination that the identified object is an obstacle to movement of the boom.

6. An imaging system, comprising:
one or more tools mounted to a boom carried by an agricultural machine;
an image capture device mounted to the boom; and
one or more processors configured to:
identify an object in an image captured by the image capture device;
determine whether the identified object is an obstacle to movement of the boom; and
generate a warning signal responsive to a determination that the identified object is an obstacle to movement of the boom.

7. The imaging system of claim 6, wherein the one or more processors are configured to:
detect, from the image captured by the image capture device, an end of a field; and
identify the object in the image captured by the image capture device responsive to a detection of the end of the field; optionally wherein the one or more processors are configured to detect, in the image captured by the image capture device, the end of the field using green-on-brown imaging.

8. The imaging system of claim 7, wherein the one or more processors are configured to distinguish, in the image captured by the image capture device, between the end of the field and already emerged crop plants using green-on-green imaging.

9. The imaging system of claim 6, wherein the warning signal is configured to trigger an alarm to alert an operator of the agricultural machine that the boom is moving towards an obstacle.

10. The imaging system of claim 6, wherein the warning signal is configured to trigger:
provision of one or more driving suggestions to an operator of the agricultural machine; or one or more automatic collision prevention actions.

11. The imaging system of claim 6, wherein the one or more processors are further configured to:
determine one or more boom trajectories corresponding to paths predicted to be traveled across the image for one or more points along the boom responsive to a steering signal received from a steering system of the agricultural machine; and
display, on an electronic display, the image and one or more trajectory lines superimposed over the image, the one or more trajectory lines illustrating the one or more boom trajectories.

12. A method of operating an imaging system, the method comprising:
receiving image data corresponding to an image captured by an image capture device mounted to a boom carried by an agricultural machine;
receiving a steering signal generated by a steering system of the agricultural machine;
determining one or more boom trajectories corresponding to paths predicted to be traveled across the image for one or more points along the boom responsive to the steering signal;
detecting one or more objects in the image;
determining whether the one or more detected objects are obstacles to movement of the boom responsive to the one or more determined boom trajectories and the one or more detected objects; and
generating a warning signal responsive to a determination that the identified object is an obstacle to movement of the boom.

13. The method of claim 12, wherein detecting one or more objects in the image comprises detecting one or more of a fence post, a telephone line pole, a telephone line, agricultural equipment, or a fence.

14. The method of claim 12, wherein determining whether the one or more detected objects are obstacles to movement of the boom responsive to the one or more determined boom trajectories and the one or more detected objects comprises: determining whether the one or more boom trajectories intersect with the one or more detected objects in the image; or determining whether any of the one or more detected objects is between the boom tip trajectory and the agricultural machine.

15. The method of claim 12, wherein:
receiving image data corresponding to an image comprises receiving left image data corresponding to a left image and right image data corresponding to a right image, the left image captured by a left image capture device mounted to a left end of boom from a forward-facing perspective of an operator of the agricultural machine, the right image captured by a right image capture device mounted to a right end of the boom from the forward-facing perspective of the operator; and
displaying, simultaneously on an electronic display, the left image and the right image with one or more trajectory lines corresponding to the one or more determined boom trajectories overlaying the left image and the right image.
